(19) Europäisches Patentamt / European Patent Office / Office européen des brevets

(11) **EP 2 060 089 B1**

(12) **EUROPEAN PATENT SPECIFICATION**

(45) Date of publication and mention
of the grant of the patent:
**08.11.2017 Bulletin 2017/45**

(51) Int Cl.:
***H04L 29/06*** *(2006.01)*

(21) Application number: **06783967.0**

(22) Date of filing: **05.09.2006**

(86) International application number:
**PCT/NL2006/050221**

(87) International publication number:
**WO 2008/030083 (13.03.2008 Gazette 2008/11)**

(54) **NETWORK NODE OPTIMIZATION WITH TRIGGERED EXPRESSIONS**

NETZKNOTENOPTIMIERUNG MIT GETRIGGERTEN EXPRESSIONEN

OPTIMISATION DE NOEUDS DE RÉSEAU AVEC DES EXPRESSIONS DÉCLENCHÉES

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**20.05.2009 Bulletin 2009/21**

(73) Proprietor: **Telefonaktiebolaget LM Ericsson (publ)**
**164 83 Stockholm (SE)**

(72) Inventors:
• **HENDRIKS, Jozef Henricus Petrus**
**NL-5045 DP Tilburg (NL)**
• **REITSMA, Erik Jan**
**NL-2721 DG Zoetemer (NL)**
• **ZWAAL, Hugo**
**NL-4811 PW Breda (NL)**
• **VERHEIJEN, Mieke**
**B-2600 Berchem (BE)**

(74) Representative: **Ericsson**
**Patent Development**
**Torshamnsgatan 21-23**
**164 80 Stockholm (SE)**

(56) References cited:
**EP-A- 1 298 527        EP-A- 1 526 457**
**US-A1- 2004 039 786    US-A1- 2004 054 726**

• **DEY A K: "PROVIDING ARCHITECTURAL SUPPORT FOR BUILDING CONTEXT-AWARE APPLICATIONS" INTERNET CITATION, [Online] November 2000 (2000-11), XP002188154 Retrieved from the Internet: URL:http://www.cc.gatech.edu/fce/ctk/pubs/ dey-thesis.pdf> [retrieved on 2002-01-23]**

## Description

## Technical field

The present invention relates to a method for providing a service in a communication network, in which the service comprises evaluating a request comprising an expression, the expression being a function (e.g. a boolean function) of a plurality of elements, each element relating to data originating from one or more context sources available in the communication network. In a further aspect, the present invention relates to a service node for a communication network.

## Background

Currently when a context source provides information to a requestor in a communication network, this is either done by event trigger based or request based mechanisms. Some service require the evaluation of an expression of the values of one or more context sources. For each evaluation the context sources are interrogated. This may cause an unacceptable amount of communication between the service node and the context source or context sources.
The article 'Providing architectural support for boulding context-aware applications' by A.K. Dey discloses methods for evaluating expressions in the context of interactive applications, especially context-aware applications. A context toolkit is disclosed which allows design of context-aware computing applications.
European patent application EP-A-1 526 457 describes a system with context aware execution of rule sets entered by a user. All context sources need to be queried before evaluation.

## Summary

The present invention seeks to provide an improvement in network performance for a communication network providing a service involving multiple context sources.
According to the present invention, a method according to claim 1 and a service node according to claim 12 are provided. Further advantageous aspects are provided in dependent claims 2-11 and 13-15.

## Brief description of the drawings

The present invention will be discussed in more detail below, using a number of exemplary embodiments, with reference to the attached drawings, in which

Fig. 1 shows a schematic diagram of a network allowing the evaluation of an expression;
Fig. 2 shows a schematic diagram of a network implementing an embodiment of the present invention;
Fig. 3 shows a schematic diagram of a network, in which the evaluation of an expression is performed according to an embodiment of the present invention;
Fig. 4 shows a sequence diagram of a naive implementation of an evaluation of an expression;
Fig. 5 shows a sequence diagram of an implementation of an evaluation of an expression according to an embodiment of the present invention;
Fig. 6 shows a sequence diagram of an implementation of an evaluation of an expression according to a further embodiment of the present invention;
Fig. 7 shows a sequence diagram of an implementation of an evaluation of an expression according to a further embodiment of the present invention;
Fig. 8 shows a schematic diagram of a network, in which an expression is shared by multiple parent expressions;
Fig. 9 shows a sequence diagram of an implementation of an evaluation of an expression according to a further embodiment of the present invention; and
Fig. 10 shows a sequence diagram of an implementation of an evaluation of an expression according to a further embodiment of the present invention in which sharing is applied; and
Fig. 11 shows a schematic diagram of a further possible scenario in a communication network using an embodiment of the present invention.

## Detailed description

The present invention may be applied and implemented in any type of communication network structure, such as a cellular telecommunication network. The various method embodiments described below may be implemented in one of existing network hardware components or in a separate service node which interfaces with other nodes and/or components in the network 1 as required.

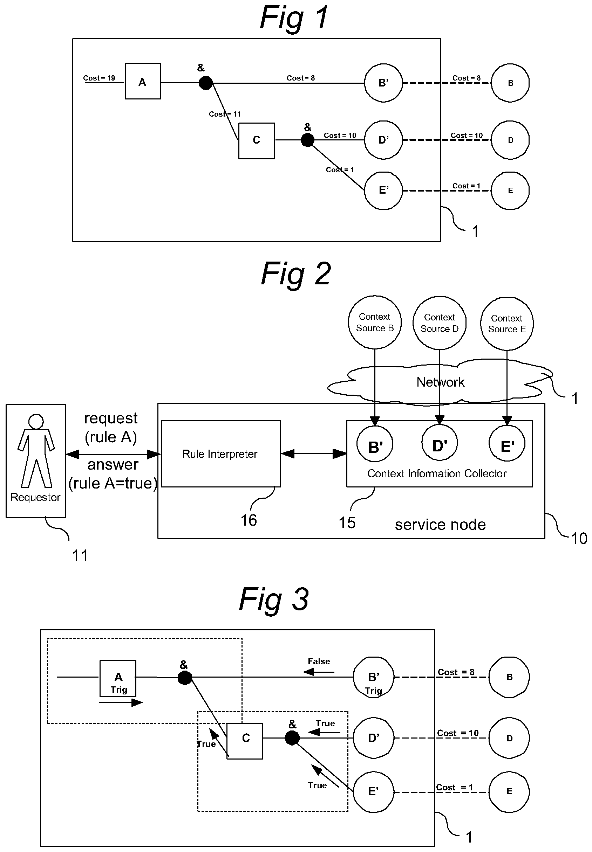

The basic concept of the present invention is illustrated in the network structure representation shown in Fig. 1. Only the elements needed to understand the invention are shown here. A service or application may use a network 1 to obtain the evaluation of an expression A depending on a plurality of elements. Actual context sources B, D, and E (providing data related to context information) may be located outside of the network 1, but are able to communicate with the network 1. E.g., the network 1 may comprise context source proxies (or context source proxy servers) B', D', and E', providing context source information in the network 1.

The network 1 shown in Fig. 1 may represent any kind of service depending on data from context sources B, D and E with certain relations or expressions A and C between them. A request from an application or service depends on the evaluation of an expression A. In the situation shown in Fig. 1, the expression A depends on two elements, i.e. another expression C (intermediate expression) and the value of context source B. The expression C depends on the value of context sources D, E as illustrated in Fig.1.

Other expressions may also be used in the embodiments of the present invention. Although the expression A illustrated above comprises one further expression (expression C), it is also envisageable that no intermediate expressions are present, i.e. the expression A to be evaluated depends directly on information (data) from one or more context sources B, D, E. Also, more complex expressions may be necessary when implementing certain network services, e.g. comprising multiple intermediate expressions.

A possible implementation of the present invention in a telecommunication network is shown in Fig. 2. Again, the context sources B, D and E are shown as being positioned outside the network 1. A requestor 11 (e.g. an application being executed in a mobile telephone operated by a user) may send a request to a service node 10, which service node 10 may be part of the network 1, or, as indicated in Fig. 2, is connected to the network 1. The service node 10 comprises a context information collector 15 connected to the context sources B, D, E, through the network 1, and a rule interpreter 16 connected to the context information collector 15 and the requestor 11. The network 1 forms the transport facility of information coming from the physical context sources B, D, E. The physical context sources are positioned outside the service node 10, but are represented within the service node 10 by their respective proxies B', D', E'. The functionalities indicated in Fig. 2 may be implemented as software programs loaded on a processing device which is known as such, e.g. in the form of the service node 10, or another already existing processing device in the network 1. The context source proxies B', D' and E' may be implemented as part of the context information collector 15. A request (indicated by Request(Rule A) in Fig. 2) is posted at the rule interpreter 16 by the requestor 11. In this case, the request concerns the evaluation of an expression Rule A, which is, as shown in relation to Fig. 1, based on the three context sources B, D and E. The relation between rules and context sources is already outlined in relation to Fig. 1 above. The requestor 11 is notified by the rule interpreter 16 when rule A evaluates to true. In order to have an as accurate as possible context information the context source proxies B', D', E' may be updated with an event triggering based mechanism, a request based mechanism, or a combination of both. Furthermore, the proxies may be programmed to update the information at regular intervals.

In order to have an as accurate as possible context information the context sources B, D, E will update the requestor 11 with a combination of event trigger based and request based mechanisms. This means that the context source B, D, E, or the context source proxy B', D', E' can adapt its update mechanism to the current needs.

According to an embodiment of the present invention, the mechanism used may be updated based on one or more of the following parameters or criteria, which may be available from or in the network 1:

- Frequency of occurrence of a request towards a selected context source;
- Frequency of occurrence of an event associated with a selected context source;
- Cost or weight of a request (i.e., a function of network resources used and a monetary value for interrogating a context source);
- Cost or weight of an event (i.e., a function of network resources used and a monetary value for dealing with an event from a context source);
- Relation to other context sources and whether the value is actually needed by the requestor.

The value of a context source B, D, E can be rather volatile or not. This depends heavily on the type of context source B, D, E. For instance, a calendar context source (e.g., indicating whether a person is in-meeting or not) for a person might change at the most about every hour, whereas the person's location might change every second while travelling.

The cost of a request illustrates what the actual cost is of a single value request for a particular context source B, D, E. This can be the cost for the requestor 11 in Fig. 2, or the cost for the service node 10 (more specifically the rule interpreter 16). The cost is represented by a weight value determined in terms of network resources (=N) and money =(€): weight = f $(N,€)$

The actual overall cost of a request (first cost value) for the present method embodiment is represented by the

following:

$$\text{Cost}_{\text{request}} = \text{Frequency}_{\text{request}} * \text{weight}_{\text{request}}$$

in which $\text{Frequency}_{\text{request}}$ is the frequency of occurrence of the request, and $\text{weight}_{\text{request}}$ is the above defined cost of a single value request for the selected context source B, D, E. The frequency of occurrence of the request may be derived from historical data, but may also be determined as an estimate or a projected value for the future.

The actual overall cost of an event (e.g. a change of value of a context source), or a second cost value, for the present method embodiment is represented by the following:

$$\text{Cost}_{\text{event}} = \text{Cost}_{\text{triggering}} + (\text{Frequency}_{\text{event}} * \text{weight}_{\text{event}})$$

in which $\text{Frequency}_{\text{event}}$ is the frequency of occurrence of the event, and $\text{weight}_{\text{event}}$ is the above defined cost of a single event for the selected context source B, D, E. $\text{Cost}_{\text{triggering}}$ is the additional cost involved with the event trigger based mechanism. Again, the frequency of occurrence of the event may be derived from historical data, but may also be determined as an estimate or a projected value for the future.

In an alternative embodiment, the factor $\text{Cost}_{\text{triggering}}$ is neglected when determining the actual overall cost of an event.

By default triggering is turned off for each context source proxy B', D', E' in order not to consume any resources (i.e., money and network resources) before an actual request comes in (i.e. all are using a request based mechanism for updating).

The context source proxy B', D', E' will decide to turn into triggering mode when the first cost value ($\text{Cost}_{\text{request}}$) is larger than a first switching value, e.g. the second cost value ($\text{Cost}_{\text{event}}$).

When the context source proxy B', D', E' is in triggering mode and is triggered due to a value change, and the context source proxy did not have a pending request, the context source proxy will decide to turn off triggering when the second cost value ($\text{Cost}_{\text{event}}$) is larger than a second switching value, e.g. the first cost value ($\text{Cost}_{\text{request}}$).

This way the context source update mechanism is adapted to the fact whether it is more expensive to trigger for an event and/or wait for an actual request.

In the above, the context source proxies B', D', E' are arranged to evaluate the cost comparison, e.g. as a functionality of the context information collector 15 of the service node 10 (see Fig. 2). However, this functionality may also be provided in other parts of the system able to communicate with the context sources B, D, E, such as the context sources B, D, E, themselves, the rule interpreter 16, or the requestor 11.

Furthermore, the cost values are calculated on the basis of historical information in the above described embodiment. However, other related data may also be used, such as estimated data or projected (future) data. Also, the cost evaluation may be based on the frequency of occurrence of requests and events only, i.e. the switch between trigger mode and request mode occurs based on evaluation of the frequency of occurrence only.

A hysteresis mechanism will prevent a 'flickering-effect' (continuous toggling between request and trigger mode) when the $\text{Cost}_{\text{event}}$ is more or less the same as $\text{Cost}_{\text{request}}$. This can easily be implemented by adding a hysteresis delta value to the cost associated with the update mechanism not used, or by subtracting the hysteresis delta value from the cost associated with the actually used update mechanism. In the above embodiments, a hysteresis delta value may be added to the first switching value, the second switching value or both the first and second switching value.

On network level there are several possible optimization mechanisms. A first optimization mechanism is triggering based on boolean values. Any node (expression) in the network can start the triggering mechanism which will start triggering on the nodes behind it using the mechanism described above. In one embodiment, the first trigger will be set on the cheapest (lowest weight) context source proxy (E'). When context source proxy E' becomes true, the next lowest weight context source proxy (context source proxy D') will be set into triggering mode. When context source proxy D' does not fire context source proxy E' will be set into request mode again. When context source proxy D' fires (value of D=true) the trigger is set on context source proxy E' again. When context source proxy E' fires (value of E=true), expression C will fire and a trigger is set on context source proxy B'. When context source proxy B' is false the expression C will be set in request mode. This is will also be propagated to the context source proxies D' and E' as is shown in the schematic diagram of Fig. 3.

When the trigger on context source proxy B' fires (value of B=true) the trigger is set again on expression C and propagated to the context source D' and E'. When the values on context sources D and E are still true the trigger on the context source proxies D' and E' will fire and cause expression C to fire (=true). Eventually expression A will fire when context source A is still true.

From the above it is clear that switching to an event trigger based mechanism may be accomplished for any on of present context sources, but also for intermediate expressions (in the above examples, expression C).

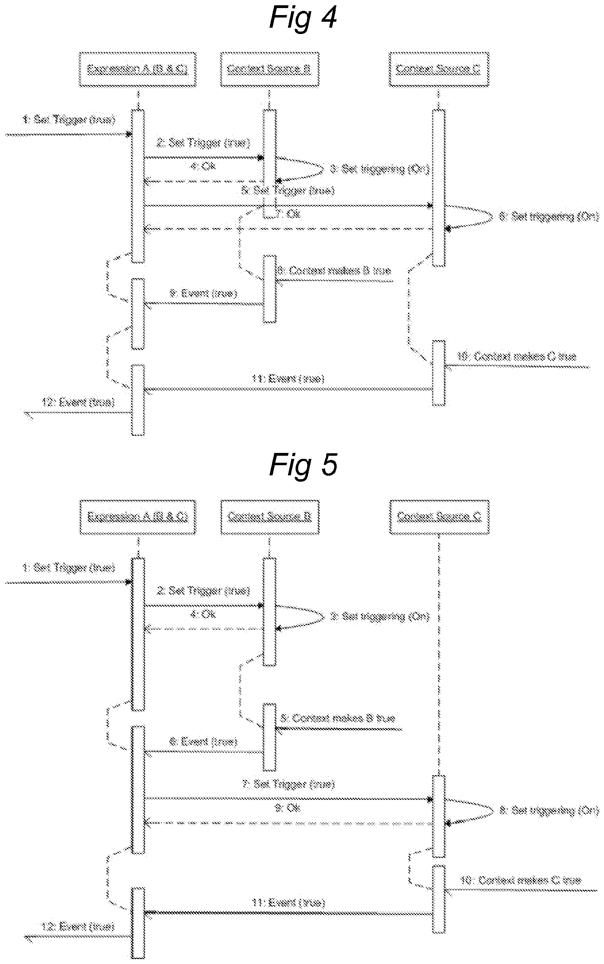

The above embodiment may also be described using sequence diagrams, which are shown in Fig. 4, 5 and 6 for a number of embodiments according to the present invention. For these examples, the scenario situation of Fig. 1 (described above) is used, for the specific situation where triggering is set on expression A (indicated by 1: Set Trigger (true) in Fig. 4, 5 and 6) while context source B and C have the value False. The Expression is as follows: A = B & C.

In a naive implementation, which is shown schematically in Fig. 4 triggering for both context sources B and C will be set (indicated by the sequence 2-4 and 5-7 in Fig. 4) and the evaluation of expression A will waits until both context sources B and C are true. Only when the context of both context source B and expression C are true (indicated by sequences 8, 9 and 10, 11 in Fig. 4), the trigger mechanism for expression A will generate event 12, and expression A will be evaluated as true.

In a first optimized implementation according to an embodiment of the present invention, of which the sequence diagram is shown in Fig. 5. In this case, the trigger mechanism is only turned on for one context source (context source proxy B', sequences 2, 3, 4 in Fig. 5) and waits for this context source proxy B' to return the value true. When this happens (sequences 5-6 in Fig. 5), the next element of expression A (i.e. expression C) is switched to trigger mode (sequences 7-9 in Fig. 5) and only when this context source becomes true (sequence 10, 11 in Fig. 5), the trigger mechanism for expression A will generate event 12, and expression A will be evaluated as true.

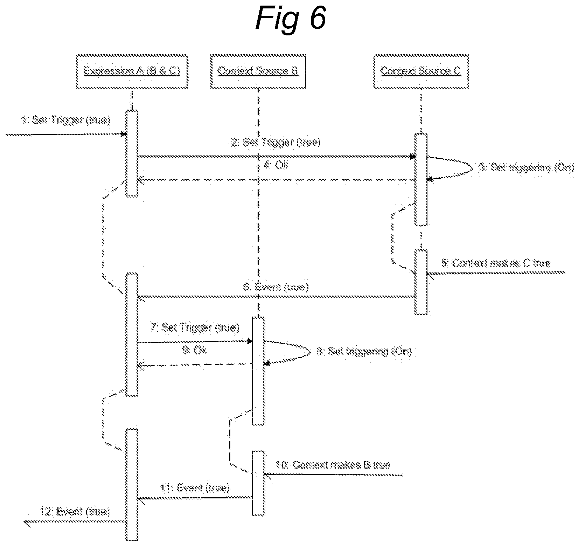

In a second optimized implementation according to a further embodiment of the present invention, of which the sequence diagram is shown in Fig. 6, the trigger mechanism is only turned on for the cheapest element of expression A (i.e. the element of expression A of which the weight for evaluation is the lowest). In this case, this is the intermediate expression C. As indicated in Fig. 6, triggering is activated for element C (sequences 2-4), and the evaluation further waits for this element source to return the value true (which is indicated by sequences 5-6 in Fig. 6). Only then, the next cheapest element of expression A (i.e. context source B) is switched to an event based trigger mechanism (sequences 7-9). When this context source B generates an event as the value thereof changes to true (sequence 10 in Fig. 6), this is relayed to the evaluation of expression A (event of context source B, sequence 11), which then generates an event that the expression A has evaluated as true (sequence 12 in Fig. 6).

In a second set of embodiments of the present invention, the optimization mechanism is using an event trigger based mechanism, in which trigger threshold values are based on value ranges, e.g. integer value ranges. This optimization considers the fact that the actual value of context sources B, D, E, is only of interest to the requestor 11 within certain value ranges and will therefore influence the triggering frequency. As a result, the number of events generated by the respective context source B, D, E is minimized, thus improving efficiency of use of the network and other resources.

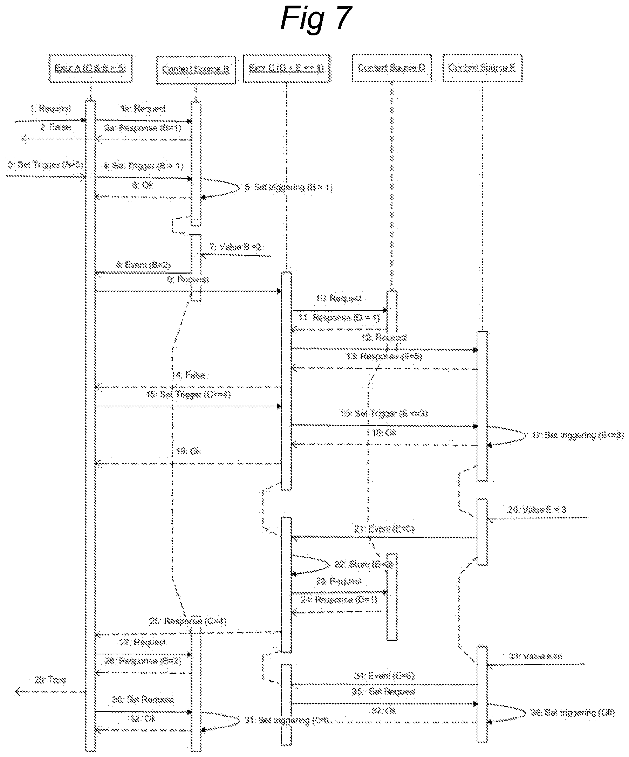

The sequence diagram of Fig. 7 shows an example of this scenario in more detail:

Step 1-6:

A request comes in for Expression A. Context source B is requested for its value and returns 1. A trigger (on true) is set for Expression A and therefore a trigger (B>1) is set for context source B.

Step 7-9:

Context source B becomes higher then 1 (B=2) generating an event (7) from context source B, and subsequently a request (9) is sent to Expression C.

Step 10-14:

The incoming request for Expression C causes Expression C to request the values of context sources D (=1) and E (=5). Expression C evaluates false and sends a response False to Expression A.

Step 15-19:

A trigger (on true) is set for expression C and therefore a trigger (E<=3) is set for context source E, because context source E is less expensive then context source D (see previously described embodiments).

Step 20-26:

Context source E becomes 3 and an event (21) is sent to Expression C. Expression C requests the value (D=1) of context source D and Expression C evaluates true (C=4) and sends a response (=true) to Expression A.

Step 27-29:

Expression A requests the value (B=2) of context source B and Expression A evaluates true and sends a True event (29) to the requestor 11.

Step 30-32:

Context source B is set into request mode on request of Expression A.

Step 33-37:

Context source E gets an event because of a value change and sends an event to Expression C. Since there is no request for Expression C it will set the context source E back into request mode.

As indicated in the above example, the trigger thresholds may be set by the requesting node (expression A or C) depending on the current circumstances.

In a further example, C is again a function of context sources D and E, and the following expressions may be evaluated: A = (C > 10), C = D + E. In this case, expression A evaluates to true when the sum of values of context source D and E is above a certain constant value (C > 10). Initially both context source D and E are evaluated to calculate the value of expression C. Then it can be determined what value transitions could cause expression C to evaluate true, and the resulting condition is split over context sources D and E. This means that a request for the actual value (=d) of context source D is done. Only when the value of context source D will make Expression C to return a value <10, context source E is requested for its actual value (=e). The trigger thresholds on context sources D and E (or context source proxies D' and E') will be equally divided depending on the required value for Expression C. The trigger values have to be chosen in such way that the time until either D' or E' reaches the trigger value is as long as possible. The triggers on context source proxies D' and E' will be adapted when one of the triggers on context source proxies D' and E' fires. The threshold triggers are calculated in this example as follows:

$$ D_{thres} = d + \frac{(c-d-e)}{2}; E_{thres} = e + \frac{(c-d-e)}{2}. $$

In this example, the threshold triggers are calculated as follows:

$$ D_{thres} = 2 + \frac{(10-2-3)}{2} = 4.5; E_{thres} = 3 + \frac{(10-2-3)}{2} = 5.5. $$

When context source proxy E' fires on value 7 (i.e. generates an event), the trigger thresholds for both context source proxies are adapted as follows:

$$ D_{thres} = 2 + \frac{(10-2-7)}{2} = 2.5; E_{thres} = 7 + \frac{(10-2-7)}{2} = 7.5. $$

When context source proxy D' fires on value 4, this immediately causes the trigger on Expression C to fire and the event (value=11) that is sent to Expression A will cause Expression A to become true. The triggers are then removed.

The above embodiment example may also use other mathematical functions, as shown in the following multiplication example.

Consider the following expression A: (D * E < 10). In this case the trigger values on context source proxies D' and E' will be calculated as follows:

$$ D_{thres} = d * \sqrt{\frac{10}{d*e}}; E_{thres} = e * \sqrt{\frac{10}{d*e}}. $$ For every kind of mathematical function, a corresponding setting of trigger thresholds may be made, which will result in as long a time as possible before an event is generated.

In a further scenario it is shown that ranges where additional conditions on values of expressions or context source are given, further optimization is possible. We assume that an expression A exists, which is the sum of B and C. B and C may be context sources or expressions. Furthermore we assume that an additional condition on C exists, that C will be larger than 5. This condition may be the result of some other expression in which C is used, or because of characteristics of the context source C, or because of characteristics and conditions of the context sources and expressions on which C depends. Furthermore we assume that a trigger has been set on A to report as soon as the value of A is larger than 12. We assume that the current value of B is 10 and the current value of C is 6. According to the previously explained method, thresholds for B and C can be calculated. The threshold for B would be 8 and the threshold for C would be 4. However, C already has a condition that it is larger than 5. Therefore the threshold of 4 for C is unnecessary low. The value of C will already be reported as soon as C is smaller than 5, or C cannot become smaller than 5. Therefore the trigger thresholds resulting from the condition on A should not be equally divided between B and C, but C should only have the already given threshold of 5, which leaves a threshold of B of 7 instead of 8, because any combination of thresholds for B and C is valid as long as the sum is equal to the threshold of A. Now B will only send an event when it becomes smaller than 7, which should be later than when it becomes smaller than 8. For C the threshold is still the original threshold of 5, so C will still send an event when C is smaller than 5. So because of this optimization, it will often take more time, but never less time, until an event is sent. This means that using this optimization fewer events will be sent, and therefore the cost will be reduced by this optimization.

From the above examples, it is clear that using ranges will make it possible to set the trigger values on the context source proxies more accurate, which will lead to fewer events.

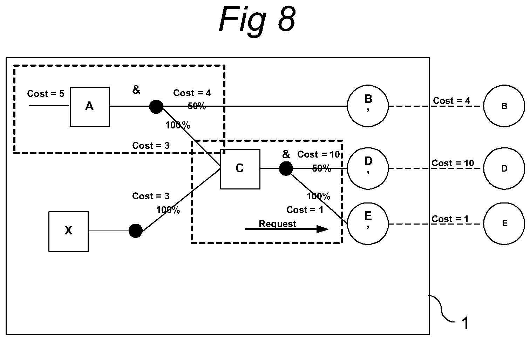

In a further embodiment a possibility is used to exploit the presence of multiple parent elements sharing a request to child elements (context resources or intermediate expressions). It may be envisaged that the expression C (child expression) of the embodiments and examples above is shared by expression A and another expression X (parent expressions), as shown in Fig. 8. Expression A is the same as in the embodiment of Fig. 1 and 3, however, the associated context source weights are the different (cost(B)=4, cost(D)=10 and cost(E)=1). When the request for evaluation of expression A and expression X are received at the same time from the respective associated requestors 11, the weight for evaluation of expression C may be shared between the two parent expressions A and X. This may result in a different evaluation result when determining which context source is to be interrogated first: In the situation shown in Fig. 8 it is clear that the context source E has the be interrogated first (indicated by the arrow labeled 'Request'), as opposed to the situation described above, where context source B was interrogated first.

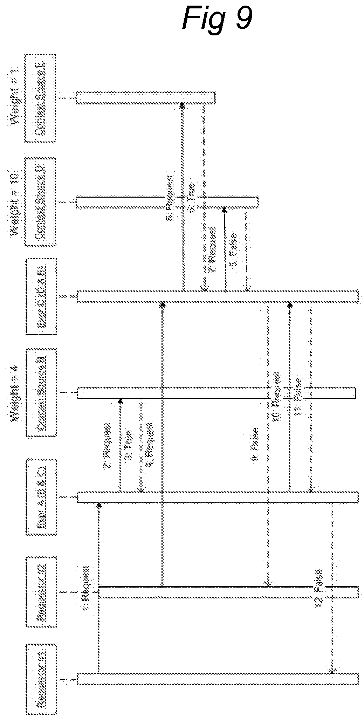

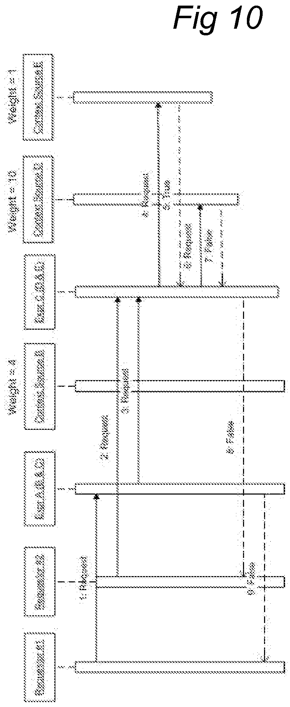

Also with respect to the number of requests, the present invention embodiment of sharing information from the context sources provides a more optimal solution than a naive solution. In Fig. 9 and 10, sequence diagrams for the example of Fig. 8 are given, for a least optimal situation, i.e. where context source B and E are true, and context source D is false.

In a naive version of a lowest weight first implementation, of which the sequence diagram is schematically shown in Fig. 9, the fact that there is more than one parent element (Requestor #1, Requestor #2) seeking the same information is not taken into account. Requestor #1 issues a request to Context source B (sequences 1-3) as this is the lowest weight element of expression A (4 versus 6). Requestor #2 issues a direct request to expression C. This request will be further issued to context sources E and D (first to E as this context resource has the lowest weight of the two elements) in steps 5-9. The result is that expression C evaluates as false, which is reported back to Requestor 2 in step 9. Finally, a request will be made from expression A to expression C again (step 10) as context source B was evaluated as true in expression C. The value of evaluation of expression C is already known (= false), which is propagated back to expression A and eventually Requestor #1.

In an embodiment of the present invention, cost sharing is taken into account. This is illustrated in the sequence diagram of Fig. 10. As it is known that expression C is evaluated for both Requestor #1 and Requestor #2, and the result of evaluation of expression C is false, context source B need not be interrogated anymore. The total number of requests, and consequently the number of result events is in this case lower than in the naive implementation of Fig. 9.

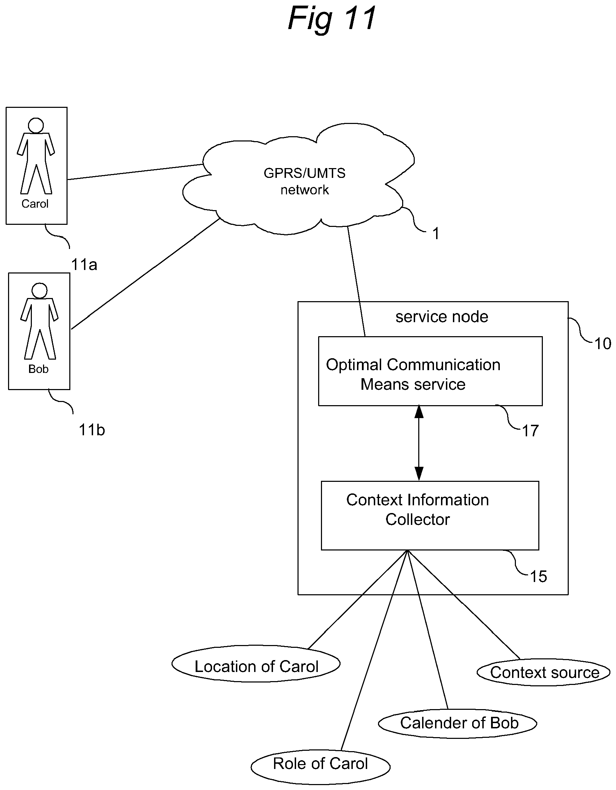

In Fig. 11, a further illustrative example of a possible network architecture is shown for providing a service dependent on the data of more than one context source. In this example, there are two requestors 11a (Carol) and 11b (Bob), which are connected to a GPRS/UMTS network 1. The GPRS/UMTS network 1 is connected to a service node 10, which is arranged to provide an Optimal Communication Means (OCM) service, e.g. implemented as an application 17 in the service node 10. The service node 10 further comprises a Context Information Collector (CIC) 15, which is arranged to interface with a number of context sources.

Carol and Bob are subscribed to the 'Optimal Communication Means Service' and have defined a profile with the preferences they have upon optimal communication means in specific situations. These preferences are stored by the OCM service 17, e.g. in a database (not shown). This means that the profile of Bob is used to decide upon the list of communication means presented to Carol when he/she tries to communicate with Bob.

Carol is in her car and is trying to reach Bob who is at work in a meeting. Bob has defined in his profile that he can be reached by Instant Messaging, SMS or voice mail while in a meeting. Carol has defined in her profile that she can only use voice communication while driving a car.

Carol selects Bob from the contact list. The OCM service 17 retrieves the applicable context from both Carol and Bob through the CIC 15. The OCM service 17 discovers that because of the context of Carol and Bob there is no communication means available at this very moment and presents this through a voice message to Carol (via GPRS/UMTS network 1). The OCM service 17 also gives Carol the choice of contacting her as soon as Bob becomes available. Carol decides that she wants to contact Bob through a voice call as soon as Bob becomes available.

As soon as Bob's meeting has ended his context changes in such a way that he is reachable through voice. The OCM service 17 decides to contact Carol and Carol can decide to call Bob. The following context sources are applicable in this scenario: Calendar info (Bob): To determine in-meeting for instance;

> Role (Carol): To determine in-car situation;
> Location (Carol): To determine speed.

The various method embodiments may also be used in this example, i.e. to determine which context source is to be interrogated first based on the cost of evaluating the expression used by the OCM service 17.

The expression and intermediate expressions as used in the above embodiments and descriptions are functions of boolean elements, having a value of either true or false. In further embodiments, the elements may also comprise functions of numerical values obtained from context sources B, D, E, e.g. to check whether a value of a context source is within a certain range. In actual network implementations, some of the context sources may respond with a value 'unknown' when a value is not available, e.g. in case a cell phone is turned off, or a GPS system does not deliver any information. In most applications this will result in an exception code, which may lead to unavailability of the service.

In a further embodiment, this possibility of a context source providing a value of unknown may be utilized to further improve the efficiency of the network or to reduce cost. In a first variant, it is taken into account that next to the boolean values true and false, a context source B, D, E, may provide the value unknown as response to an interrogation. Depending on the (intermediate) expression to be evaluated, this may result in the finding that it is not necessary to interrogate any further context sources for that request, thus reducing network data traffic and interrogation cost.

In a first example, again the expressions A and C of Fig. 1 is used: intermediate expression C is true when both context sources D and E return a value true, and expression A is true when both context source B and intermediate expression C return a value true. Suppose that context source E is unavailable, then the value of intermediate expression C depends on the value of context source D. After all, when context source D returns false, intermediate expression C will evaluate to false as well, but if the value of context source D is true or unknown, the value of intermediate expression C is unknown. If the value of intermediate expression C is false, there is no need to continue asking for context source B's or E's values, which saves network resources. If the value of intermediate expression C is unknown, context source B must be interrogated.

The following table summarizes this as follows

| and | E=true | E=false | E=unknown |
|---|---|---|---|
| D=true | C=true | C=false | C=unknown |
| D=false | C=false | C=false | **C=false** |
| D=unknown | C=unknown | **C=false** | C=unknown |

The false cases in the unknown row and column (=bold face) are caught automatically through this invention, which is an extra optimization not taken care of before.

In the next example, the result of this embodiment will be viewed in case of a boolean OR expression. Suppose that both expression A and expression C are boolean or-expressions which return true when at least one of the context sources or child expressions is true, then the same logic applies. When context source D is unknown, then the service should still ask context source E for its value. Suppose that context source E is true, then it does not matter that context source D is unknown. After all, when one of the context sources is true, expression C results in true as well. Then, the condition to have expression C return true is satisfied, and no more network resources need to be wasted. The following table gives an overview of the return values (the case explained above can be mapped on the bold entries):

| or | E=true | E=false | E=unknown |
|---|---|---|---|
| D=true | C=true | C=true | **C=true** |
| D=false | C=true | C=false | C=unknown |
| D=unknown | **C=true** | C=unknown | C=unknown |

The true cases in the unknown row and column (=bold face) are caught automatically through this invention, which is an extra optimization not taken care of before.

In a further variant, the context source B, D, E, is first interrogated on availability of the respective value. Only when the context source does not return unknown will it be asked for its value, in the case of booleans, true or false, or in the case of integer range values, the value itself.

If the context source B, D, E, does return unknown, the latest value retained from a previous request can be used as input for the expression A or C.

In an example of this embodiment, for boolean values, each expression and context source contains two options, Availability and Latest. Availability consists of two choices, available and true, or available and false. When the context source value is unknown, the service can look at the latest value retained (Latest), which can also be either true or false. In this way, unknown values are no longer an issue. Unknown values are represented by the two cases in which the Availability is false. The Availability depends on the Latest and Availability values of the children elements (either expressions or context sources). Suppose expression C = A & B. Then the Availability of expression C depends on the Latest and Availability of elements A and B as follows:

$$Availability(C) = (Availability(A) \ \& \ Availability(B))$$
$$| \ (Availability(A) \ \& \ not \ Latest(A)))$$
$$| \ (Availability(B) \ \& \ not \ Latest(B)))$$

In words, expression C is known, if elements A and B are known (in which case the value of expression C is the value of the boolean AND (A & B), or if element A is available and false (in which case the value of expression C is false) or if element B is available and false (in which case the value of expression C is false).

Initially the Latest value can be set to either true or false. As soon as the context source or expression becomes known, the correct value will be set. As long as the Availability is false, the value of Latest should not be used.

The above described embodiments and examples are not meant to limit the scope of protection of the present application, which is defined by the features as described in the appended claims.

**Claims**

**1.** Method for providing a service in a communication network, in which the service comprises evaluating a request comprising an expression (A), the expression being a function of a plurality of context sources (B, D, E) available in the communication network and/or intermediate expressions (C),
in which said context sources (B, D, E) use one of the following mechanisms:

- a request based mechanism wherein the context source receives requests for its value and reply with its current value, or
- a trigger based mechanism wherein the context source receives a request for an event and each time the value of the context source changes, the context source sends an event with its current value.

the method comprising:

- requesting a selected one of said context sources (B, D, E) for its value,
- if the expression (A) evaluates to a first value based on the received value for the request, then switching the selected one of said context sources (B, D, E) to a trigger mode, and
- if the expression (A) evaluates to a second value based on the received value for the request then proceeding with interrogating a further one of the plurality of context sources (B, D, E) available in the communication network.

**2.** Method according to claim 1, the method further comprising
determining an order of context sources (B, D, E) based on the expression and weights of the context sources (B, D, E), a weight of a context source (B, D, E) being a function of network resources used and a monetary value for evaluation of the expression towards the one or more context sources (B, D, E), and in which the selected one of said context sources (B, D, E) is the lowest order context source (B, D, E), and the further one of the plurality of said context sources (B, D, E) is the next lowest order context source (B, D, E).

**3.** Method according to any one of claims 1-2, in which the expression is a boolean function, the data from each of the context sources (B, D, E) being true or false,

4. Method according to any one of claims 1-2, in which the data from the context sources (B, D, E) is a numeric value, and the expression comprises a function of the values of the context sources (B, D, E).

5. Method according to claim 4, in which the function comprises a comparison of the numeric value with a predetermined range.

6. Method according to claim 5, in which the function comprises an evaluation of a mathematic operation of the values of one or more of the context sources (B, D, E).

7. Method according to claim 5, in which the evaluation of a mathematical operation involving data values from two or more context sources (B, D, E) comprises setting a trigger threshold for each of the context sources (B, D, E) depending on the actual values and the mathematical operation.

8. Method according to any one of claims 3-7, in which the data from each of the context sources (B, D, E) may further have the value unknown.

9. Method according to claim 8, in which the method further comprises to use a latest obtained value for the respective context source value if the value is unknown.

10. Method according to any one of the claims 1-9, in which the data of each, of the plurality of context sources (B, D, E) is stored in an associated proxy server (B', D', E') accessible for the service

11. Method according to any one of the claims 1-10, in which a child expression is used by multiple parent expressions, and the weight for evaluating the child expression is shared between the multiple parent expressions when the associated requests are received simultaneously.

12. Service node for a communication network providing a service in the communication network, in which the service node (10) is arranged to receive and evaluate a request, the request comprising an expression being a function of a plurality of context sources (B, D, E) available in the communication network and/or intermediate expressions (C), the service node (10), in operation, being connectable to said context sources (B, D, E), in which the service node (10) is further arranged to execute the method according to any one of claims 1-11.

13. Service node according to claim 12, in which the service node (10) comprises a rule interpreter (16) for evaluating the expression.

14. Service node according to claim 12 or 13, in which the service node (10) comprises a context information collector (15) for interfacing with said context sources (B, D, E).

15. Service node according to claim 14, in which the context information collector 15) comprises a context source proxy (B', D', E') for each of said context sources (B, D, E), for storing data associated with each respective context source (B, D, E).

**Patentansprüche**

1. Verfahren zur Bereitstellung eines Dienstes in einem Kommunikationsnetzwerk, wobei der Dienst ein Auswerten einer Anforderung umfasst, die einen Ausdruck (A), wobei der Ausdruck eine Funktion einer Mehrzahl von Kontextquellen (B, D, E) ist, die im Kommunikationsnetzwerk verfügbar sind, und/oder Zwischenausdrücke (C) umfasst, wobei die Kontextquellen (B, D, E) einen der folgenden Mechanismen verwenden:

- einen anforderungsbasierten Mechanismus, wobei die Kontextquelle Anforderungen für ihren Wert empfängt und mit ihrem aktuellen Wert antwortet, oder
- einen auslöserbasierten Mechanismus, wobei die Kontextquelle eine Anforderung für ein Ereignis empfängt, und die Kontextquelle jedes Mal, wenn sich der Wert der Kontextquelle ändert, ein Ereignis mit ihrem aktuellen Wert sendet,

wobei das Verfahren umfasst:

- Anfordern einer ausgewählten des Kontextquellen (B, D, E) für ihren Wert,
- Umschalten dann, wenn der Ausdruck (A) einen ersten Wert basierend auf dem empfangenen Wert für die Anforderung ergibt, der ausgewählten der Kontextquellen (B, D, E) auf einen Auslösermodus, und
- Fortfahren dann, wenn der Ausdruck (A) einen zweiten Wert basierend auf dem empfangenen Wert für die Anforderung ergibt, mit einem Abfragen einer weiteren der Mehrzahl von Kontextquellen (B, D, E), die im Kommunikationsnetzwerk verfügbar sind.

2.  Verfahren nach Anspruch 1, wobei das Verfahren ferner umfasst:

Bestimmen einer Ordnung von Kontextquellen (B, D, E) basierend auf dem Ausdruck und Gewichten der Kontextquellen (B, D, E), wobei ein Gewicht einer Kontextquelle (B, D, E) eine Funktion von verwendeten Netzwerkressourcen und eines Geldwerts zur Auswertung des Ausdrucks für die eine oder die mehreren Kontextquellen (B, D, E) ist, und wobei die ausgewählte der Kontextquellen (B, D, E) die Kontextquelle (B, D, E) niedrigster Ordnung ist, und die weitere der Mehrzahl von Kontextquellen (B, D, E) die Kontextquelle (B, D, E) zweitniedrigster Ordnung ist.

3.  Verfahren nach einem der Ansprüche 1 bis 2, wobei der Ausdruck eine Boole-Funktion ist, und die Daten von jeder der Kontextquellen (B, D, E) wahr oder falsch sind.

4.  Verfahren nach einem der Ansprüche 1 bis 2, wobei es sich bei den Daten von den Kontextquellen (B, D, E) um einen numerischen Wert handelt, und der Ausdruck eine Funktion der Werte der Kontextquellen (B, D, E) umfasst.

5.  Verfahren nach Anspruch 4, wobei die Funktion einen Vergleich des numerischen Wertes mit einem vorbestimmten Bereich umfasst.

6.  Verfahren nach Anspruch 5, wobei die Funktion eine Auswertung einer mathematischen Operation der Werte einer oder mehrerer der Kontextquellen (B, D, E) umfasst.

7.  Verfahren nach Anspruch 5, wobei die Auswertung einer mathematischen Operation, die Datenwerte von zwei oder mehr Kontextquellen (B, D, E) einbezieht, ein Festlegen einer Auslöserschwelle für jede der Kontextquellen (B, D, E) in Abhängigkeit von den tatsächlichen Werten und der mathematischen Operation umfasst.

8.  Verfahren nach einem der Ansprüche 3 bis 7, wobei die Daten von jeder der Kontextquellen (B, D, E) ferner den Wert unbekannt aufweisen können.

9.  Verfahren nach Anspruch 8, wobei das Verfahren ferner ein Verwenden des letzten erhaltenen Werts für den jeweiligen Kontextquellenwert umfasst, wenn der Wert unbekannt ist.

10. Verfahren nach einem der Ansprüche 1 bis 9, wobei die Daten einer jeden der Mehrzahl von Kontextquellen (B, D, E) in einem assoziierten Proxyserver (B', D', E') gespeichert werden, auf den der Dienst zugreifen kann.

11. Verfahren nach einem der Ansprüche 1 bis 10, wobei ein untergeordneter Ausdruck durch mehrere übergeordnete Ausdrücke verwendet wird, und das Gewicht zum Auswerten des untergeordneten Ausdrucks zwischen den mehreren übergeordneten Ausdrücken gemeinsam benutzt wird, wenn die assoziierten Anforderungen simultan empfangen werden.

12. Dienstknoten für ein Kommunikationsnetzwerk, der einen Dienst im Kommunikationsnetzwerk bereitstellt, wobei der Dienstknoten (10) so ausgelegt ist, dass er eine Anforderung empfängt und auswertet, wobei die Anforderung einen Ausdruck, der eine Funktion einer Mehrzahl von Kontextquellen (B, D, E) ist, die im Kommunikationsnetzwerk verfügbar sind, und/oder Zwischenausdrücke (C) umfasst, und der Dienstknoten (10) in Betrieb mit den Kontextquellen (B, D, E) verbunden werden kann, wobei der Dienstknoten (10) ferner zum Ausführen des Verfahrens nach einem der Ansprüche 1 bis 11 ausgelegt ist.

13. Dienstknoten nach Anspruch 12, wobei der Dienstknoten (10) einen Regelinterpretierer (16) zum Auswerten des Ausdrucks umfasst.

**14.** Dienstknoten nach Anspruch 12 oder 13, wobei der Dienstknoten (10) einen Kontextinformationssammler (15) zur Verbindung mit den Kontextquellen (B, D, E) umfasst.

**15.** Dienstknoten nach Anspruch 14, wobei der Kontextinformationssammler (15) einen Kontextquellen-Proxy (B', D', E') für jede der Kontextquellen (B, D, E) zum Speichern von Daten umfasst, die mit jeder jeweiligen Kontextquelle (B, D, E) assoziiert sind.

**Revendications**

**1.** Procédé pour fournir un service dans un réseau de communication, dans lequel le service comprend l'évaluation d'une demande comprenant une expression (A), l'expression étant une fonction d'une pluralité de sources de contexte (B, D, E) disponibles dans le réseau de communication, et/ou des expressions intermédiaires (C), dans lequel lesdites sources de contexte (B, D, E) utilisent l'un des mécanismes suivantes :

- un mécanisme basé sur demande, dans lequel la source de contexte reçoit des demandes pour sa valeur et répond avec sa valeur actuelle, ou
- un mécanisme basé sur déclenchement, dans lequel la source de contexte reçoit une demande pour un événement et, à chaque changement de la valeur de la source de contexte, la source de contexte envoie un événement avec sa valeur actuelle,

le procédé comprenant :

- la demande de l'une sélectionnée desdites sources de contexte (B, D, E) pour sa valeur,
- si l'expression (A) est évaluée à une première valeur sur la base de la valeur reçue pour la demande, alors la commutation de l'une sélectionnées desdites sources de contexte (B, D, E) dans un mode de déclenchement, et
- si l'expression (A) est évaluée à une deuxième valeur sur la base de la valeur reçue pour la demande, alors la poursuite avec l'interrogation d'une autre de la pluralité de sources de contexte (B, D, E) disponibles dans le réseau de communication.

**2.** Procédé selon la revendication 1, le procédé comprenant en outre :

la détermination d'un ordre de sources de contexte (B, D, E) sur la base de l'expression et de poids des sources de contexte (B, D, E), un poids d'une source de contexte (B, D, E) étant une fonction de ressources de réseau utilisées et une valeur monétaire pour une évaluation de l'expression vers l'une ou plusieurs sources de contexte (B, D, E), et dans lequel l'une sélectionnée desdites sources de contexte (B, D, E) est la source de contexte (B, D, E) d'ordre le plus bas, et l'autre de la pluralité de sources de contexte (B, D, E) est la source de contexte (B, D, E) d'ordre le plus bas suivant.

**3.** Procédé selon l'une quelconque des revendications 1 et 2, dans lequel l'expression est une fonction booléenne, les données de chacune des sources de contexte (B, D, E) étant vrai ou faux.

**4.** Procédé selon l'une quelconque des revendications 1 et 2, dans lequel les données des sources de contexte (B, D, E) sont une valeur numérique, et l'expression comprend une fonction des valeurs des sources de contexte (B, D, E).

**5.** Procédé selon la revendication 4, dans lequel la fonction comprend une comparaison de la valeur numérique à une plage prédéterminée.

**6.** Procédé selon la revendication 5, dans lequel la fonction comprend une évaluation d'une opération mathématique des valeurs de l'une ou plusieurs des sources de contexte (B, D, E).

**7.** Procédé selon la revendication 5, dans lequel l'évaluation d'une opération mathématique impliquant des valeurs de données provenant d'au moins deux sources de contexte (B, D, E) comprend le réglage d'un seuil de déclenchement pour chacune des sources de contexte (B, D, E) en fonction des valeurs réelles et de l'opération mathématique.

**8.** Procédé selon l'une quelconque des revendications 3 à 7, dans lequel les données de chacune des sources de contexte (B, D, E) peuvent en outre avoir la valeur inconnue.

9. Procédé selon la revendication 8, dans lequel le procédé comprend en outre l'utilisation d'une valeur obtenue la plus récente pour la valeur de source de contexte respective si la valeur est inconnue.

10. Procédé selon l'une quelconque des revendications 1 à 9, dans lequel les données de chacune de la pluralité de sources de contexte (B, D, E) sont mémorisées dans un serveur proxy associé (B', D', E') accessible pour le service.

11. Procédé selon l'une quelconque des revendications 1 à 10, dans lequel une expression fille est utilisée par de multiples expressions mères, et le poids pour l'évaluation de l'expression fille est partagé entre les multiples expressions mères lorsque les demandes associées sont reçues simultanément.

12. Noeud de service pour un réseau de communication fournissant un service dans le réseau de communication, dans lequel le noeud de service (10) est agencé pour recevoir et évaluer une demande, la demande comprenant une expression qui est une fonction d'une pluralité de sources de contexte (B, D, E) disponibles dans le réseau de communication et/ou des expressions intermédiaires (C), le noeud de service (10), en utilisation, pouvant être raccordé aux dites sources de contexte (B, D, E), dans lequel le noeud de service (10) est en outre agencé pour exécuter le procédé selon l'une quelconque des revendications 1 à 11.

13. Noeud de service selon la revendication 12, dans lequel le noeud de service (10) comprend un interprète de règles (16) pour évaluer l'expression.

14. Noeud de service selon la revendication 12 ou 13, dans lequel le noeud de service (10) comprend un collecteur d'informations de contexte (15) pour assurer l'interface avec lesdites sources de contexte (B, D, E).

15. Noeud de service selon la revendication 14, dans lequel le collecteur d'informations de contexte (15) comprend un proxy de sources de contexte (B', D', E') pour chacune desdites sources de contexte (B, D, E), pour mémoriser des données associées à chaque source de contexte (B, D, E) respective.

## Fig 1

Cost = 19  A  &  Cost = 8  B'  Cost = 8  B

Cost = 11  C  &  Cost = 10  D'  Cost = 10  D

Cost = 1  E'  Cost = 1  E

1

## Fig 2

Context Source B    Context Source D    Context Source E

Network    1

Requestor
11

request (rule A)
answer (rule A=true)

Rule Interpreter

B'    D'    E'
Context Information Collector

16    15    service node    10

## Fig 3

A Trig    &    False    B' Trig    Cost = 8    B

True    C    &    True    D'    Cost = 10    D

True    E'    Cost = 1    E

1

## Fig 4

## Fig 5

# Fig 6

# Fig 7

# Fig 8

Fig 9

Fig 10

# Fig 11

**EP 2 060 089 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1526457 A